# EUROPÄISCHE PATENTSCHRIFT

(11) **EP 2 012 621 B1**
(45) Veröffentlichungstag und Bekanntmachung des Hinweises auf die Patenterteilung: **30.12.2009**
(21) Anmeldenummer: 08716247.5
(22) Anmeldetag: 05.03.2008
(51) Int. Cl.: A47C 1/04, A47C 7/54

(54) **VERBINDUNGSMECHANISMUS ZUR VERBINDUNG VON ARMLEHNEN AN KOSMETIKLIEGEN ODER KOSMETIKSTÜHLEN**
CONNECTION MECHANISM FOR THE CONNECTION OF ARMRESTS TO COSMETIC TABLES OR COSMETIC CHAIRS
MÉCANISME D'ASSEMBLAGE POUR ASSEMBLER DES ACCOUDOIRS À DES DIVANS OU FAUTEUILS À USAGE COSMÉTIQUE

(30) Priorität: 07.03.2007 DE 202007003390 U
(43) Veröffentlichungstag der Anmeldung: 14.01.2009
(73) Patentinhaber: Soleni Classic Gmbh, 32479 Hille (DE)
(72) Erfinder: DEERBERG, Manuel, 32479 Hille (DE); ORLITZ, Tom, 15898 Neuzelle (DE)
(74) Vertreter: Schober, Mirko
(86) Internationale Anmeldenummer: PCT/EP2008/001729
(87) Internationale Veröffentlichungsnummer: WO 2008/107165

(56) Entgegenhaltungen:
- WO-A-97/46416
- US-A- 3 260 541
- US-A1- 2002 017 813

## Beschreibung

### TECHNISCHES GEBIET

Die Erfindung betrifft einen Verbindungsmechanismus nach dem Oberbegriff des Anspruchs 1.

### STAND DER TECHNIK

Bei Kosmetikliegen bzw. Kosmetikstühlen werden in der Regel die Armlehnen bei der Montage der Liege bzw. des Stuhls seitlich in die Liege bzw. den Stuhl bis zu einem Anschlag eingesteckt, wobei hier in der Liege bzw. dem Stuhl seitlich oder auf der Liegenunterseite eine Aufnahme vorgesehen ist, in die ein entsprechender Abschnitt der Armlehne eingebracht werden kann. Bei normalem Gebrauch der Liege erfolgen die Belastungen auf die Armlehnen durch aufliegende Arme in aller Regel senkrecht zur Einsteckrichtung. Jedoch können beim Hinsetzen oder Hinlegen bzw. Aufstehen einer zu behandelnden Person auch seitliche Kräfte auf die Armlehnen auftreten. Bei einer lediglich eingesteckten Armlehne kann dies dazu führen, daß die Lehne sich unerwartet löst, so daß das Risiko von Verletzungen gegeben ist, wenn sich eine Person gerade auf der Lehne abstützt.

Die Offenlegungsschrift US 2002/0017 813 A1 zeigt einen gattungsgemässen Verbindungsmechanismus zur Befestigung der Armlehnen an eine Sitzschale.

Diesem Risiko läßt sich in aller Regel nur durch eine sachgerechte Montage vorbeugen, wobei man einer fertig montierten Liege selbst nach der Montage nicht ansieht, ob die Armlehnen ordnungsgemäß montiert sind.

### DIE ERFINDUNG

Aufgabe der Erfindung ist es daher, einen Verbindungsmechanismus zur Verbindung von Armlehnen an Kosmetikliegen bzw. Kosmetiksitzen anzugeben, der diese Nachteile nicht aufweist.

Gelöst wird diese Aufgabe mit den Merkmalen des Anspruchs 1. Vorteilhafte Ausführungsformen finden sich in den Unteransprüchen.

Erfindungsgemäß ist eine Sicherungseinrichtung vorgesehen, welche einen an dem Befestigungselement der Lehne oder der Liege vorgesehenen Abschnitt hinter- oder in diesen eingreift. Durch diese Maßnahme wird zum einen sichergestellt, daß sich die Armlehne nicht durch Druck auf die Lehne von der Liege bzw. dem Stuhl löst, zum anderen wird das Hintergreifen durch ein Einschnappgeräusch bei der Montage akustisch angezeigt, so daß der Monteur die Mitteilung erhält, daß die Armlehne ordnungsgemäß montiert ist.

### KURZBESCHREIBUNG DER ZEICHNUNGSABBILDUNG

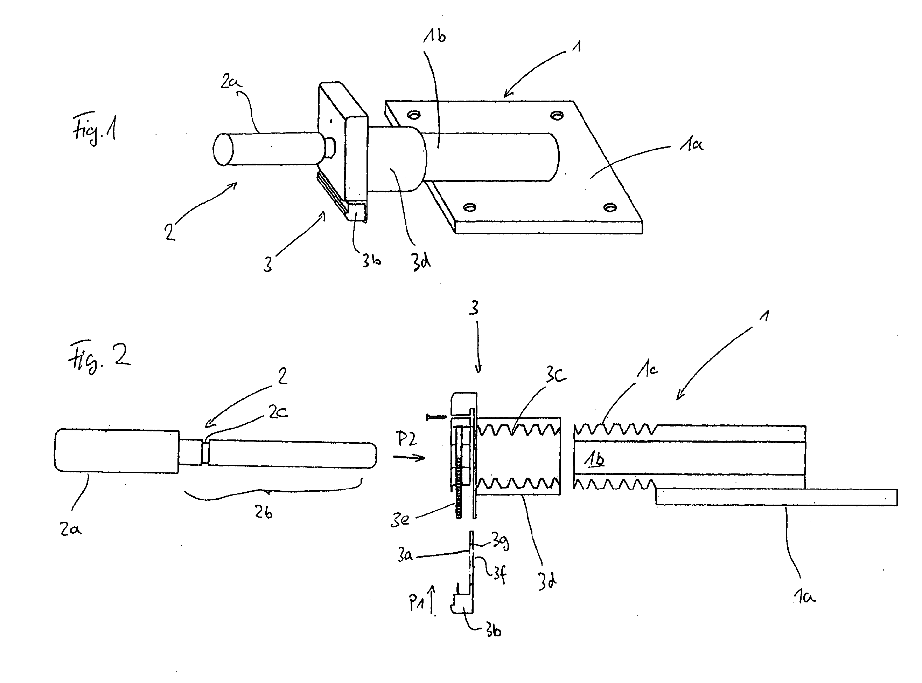

Die Erfindung wird nachfolgend anhand der Figuren 1 und 2 schematisch näher erläutert:
- Figur 1 -: zeigt eine perspektivische Ansicht des erfindungsgemäßen Verbindungsmechanismus,
- Figur 2 -: zeigt eine Explosionsdarstellung der Teile des erfindungsgemäßen Verbindungsmechanismus in Schnittansicht.

### BESTER WEG ZUR AUSFÜHRUNG DER ERFINDUNG

Die Erfindung ist auch für andere Verbindungen von Teilen an Möbelstücken, z.B. Sitz- und Liegemöbeln, geeignet. Nachfolgend wird beispielhaft auf die Anwendung zur Anbringung von Armlehnen an Kosmetikliegen bzw. Kosmetikstühlen eingegangen.

Der in Figur 1 gezeigte Verbindungsmechanismus beinhaltet ein Basiselement 1, welches einen Befestigungsabschnitt 1a zur Befestigung an einer Kosmetikliege oder einem Kosmetikstuhl (nicht gezeigt) aufweist. Mit dem Basiselement 1 ist ein Befestigungselement 2 lösbar zu verbinden, wobei das Befestigungselement 2 seinerseits einen Abschnitt 2a aufweist, der mit einer Armlehne (nicht gezeigt) fest verbunden ist.

Die Verbindung von Befestigungselement 2 und Basiselement 1 wird durch eine Sicherungseinrichtung 3 vermittelt, welche im gezeigten Beispiel mit dem Basiselement 1 verbunden ist, jedoch auch Teil des Befestigungselements 2 sein könnte.

Wie in Figur 2 gezeigt, weist das Basiselement 1 eine Aufnahme 1b auf, die zur Aufnahme des Befestigungselements 2, insbesondere des Bereichs 2b des Befestigungselements 2, ausgelegt ist. Denkbar ist ebenso eine Aufnahme am Befestigungselement, in die ein Abschnitt des Basiselements 1 aufgenommen wird. In diesem Fall wäre die Sicherungseinrichtung 3 nicht wie gezeigt am Basiselement 1, sondern am Befestigungselement 2 vorgesehen.

Die Sicherungseinrichtung 3 ist im gezeigten Beispiel fest mit dem Basiselement 1 verbunden. Bevorzugt kann hierzu eine Verschraubung mit einem in einem hülsenförmigen Teil 3d der Sicherungseinrichtung 3 vorgesehenen Gewindeabschnitt 3c an der Sicherungseinrichtung 3 und einem Gegengewindeabschnitt 1c am Basiselement 1 vorgesehen sein. Bevorzugt handelt es sich bei dem Gewindeabschnitt 3a um ein Innengewinde und bei dem entsprechenden Gegenstück 1c um ein Außengewinde.

Die Sicherungseinrichtung 3 weist zudem ein Sicherungselement 3a auf, welches über ein Betätigungselement 3b betätigt werden kann. Das Sicherungselement 3a ist mit einer Aussparung 3f versehen, durch die der Bereich 2b des Befestigungselements 2 bei Aufnahme in die Aufnahmeeinrichtung 1b des Basiselements 1 hindurchtreten kann, wenn das Betätigungselement 3b und damit das mit dem Betätigungselement 3b gekoppelte Sicherungselement 3a radial nach innen (in Richtung des Pfeils P1) gedrückt wird. Das Sicherungselement 3a ist nach außen, d.h. entgegen der Richtung des Pfeils P1 mit der Feder 3e vorgespannt, so daß bei Loslassen des Betätigungselements 3b sich dieses entgegen der Richtung des Pfeils P1 bewegt. Befindet sich der Bereich 2b des Befestigungselements 2 in der Aussparung 3f, so wird deren in der Zeichnung oberer Rand 3g gegen das Befestigungselement 2 gedrückt. Beim Vorschub des Befestigungselements 2 in Richtung des Pfeils P2 sorgt dieser Umstand dafür, daß das Sicherungselement 3a mit dem Rand 3g der Aussparung 3f in den Bereich der Hinterschneidung 2c bzw. Nut gelangt, die bevorzugt umlaufend im Bereich 2b ausgebildet ist. Der Rand 3g ist so ausgelegt, daß er in die Nut 2c eintreten kann, so daß das Befestigungselement 2 in der Aufnahme 1b bzw. am Basiselement 1 mittels der Sicherungseinrichtung verrastet. Eine Bewegung in bzw. entgegen der Pfeilrichtung P2 ist dann nicht mehr möglich, solange das Betätigungselement 3b nicht in Richtung des Pfeils P1 gedrückt wird. Das Einschnappgeräusch signalisiert, daß das Befestigungselement 2 ordnungsgemäß in der Aufnahme 1b verankert ist.

Zusätzlich kann insbesondere zur Stabilisierung eine weitere Sicherungseinrichtung (nicht gezeigt) vorgesehen sein. Diese weitere Sicherungseinrichtung ist bevorzugt so ausgebildet, daß sie ein etwa senkrecht zum Befestigungselement 2 gegen dieses vorgespanntes zweites Sicherungselement aufweist. Dieses zweite Sicherungselement greift bevorzugt in eine weitere Ausnehmung im Befestigungselement 2 ein, die vorteilhafterweise als Ringnut ausgebildet ist. Um zu verhindern, daß dieses zweite Sicherungselement bei Fixierung des Befestigungselements unbeabsichtigterweise gelöst wird, kann eine Fixier- oder Feststellschraube vorgesehen sein. Alternativ ist es möglich, das zweite Sicherungselement ohne Vorspannung lediglich durch Anziehen der Fixier- oder Feststellschraube festzulegen. Die weitere Sicherungseinrichtung ist bevorzugt in Längsrichtung des Befestigungselements beabstandet von der ersten Sicherungseinrichtung 3 angeordnet und bevorzugt an der Aufnahme 1b im Bereich des in Einschubrichtung vorderen Abschnitts des Befestigungselements 2 vorgesehen.

## Patentansprüche

1. Verbindungsmechanismus, insb. zur Verbindung von Armlehnen an Kosmetikliegen oder Kosmetikstühlen, mit einem Basiselement (1) welches einen Befestigungsabschnitt (1a) zur Befestigung an einem Möbelstück, insb. einem Sitz- oder Liegemöbelstück aufweist, und einem zur Anbringung an einem mit dem Möbelstück zu verbindenden Teil, insb. einer Armlehne, ausgelegten Befestigungselement (2), welches zur lösbaren Verbindung mit dem Befestigungsabschnitt (1a) ausgebildet ist, wobei der Befestigungsabschnitt (1a) eine Aufnahmeeinrichtung (1b) zur Aufnahme eines Bereichs (2b) des Befestigungselements (2) aufweist, wobei eine Sicherungseinrichtung (3) vorgesehen ist, welche in den Bereich (2b) des Befestigungselements (2) bei dessen Aufnahme in die Aufnahmeeinrichtung (1b) eingreift, wobei die Sicherungseinrichtung (3) ein in Richtung des in die Aufnahmeeinrichtung (1b) aufgenommenen Befestigungselements (2b) vorgespanntes Eingriffselement (3a) aufweist, welches in eine im Befestigungselement (2b) vorgesehene Ausnehmung (2c) eingreift, wobei die Ausnehmung (2c) als Nut ausgebildet ist, wobei das Eingriffselement eine Aussparung (3f) aufweist, durch welche der Bereich (2b) des Befestigungselements (2) hindurch treten kann, wobei die Aussparung (3f) einen Rand (3g) aufweist, der zum Eintreten in die Ausnehmung (2a) ausgelegt ist,
**dadurch gekennzeichnet,**
**dass** die Sicherungseinrichtung (3) ein Betätigungselement (3b) zur Betätigung des Eingriffselements (3a) aufweist, welches so ausgelegt ist, dass es radial (P1) zum Befestigungselement (2) betätigbar ist.

2. Verbindungsmechanismus nach Anspruch 1,
**dadurch gekennzeichnet,**
**dass** die Sicherungseinrichtung (3) mit der Aufnahmeeinrichtung (1b) verbunden, vorzugsweise verschraubt, ist.

3. Verbindungsmechanismus nach Anspruch 1 oder 2,
**dadurch gekennzeichnet,**
**dass** die Ausnehmung (2c) als umlaufende Nut ausgebildet ist.

4. Verbindungsmechanismus nach einem der vorherigen Ansprüche,
**dadurch gekennzeichnet,**
**dass** eine zweite Sicherungseinrichtung vorgesehen ist.

5. Verbindungsmechanismus nach Anspruch 4,
**dadurch gekennzeichnet,**
**dass** die zweite Sicherungseinrichtung ein zweites Sicherungselement aufweist und beabstandet von der ersten Sicherungseinrichtung (3) angeordnet ist.

6. Verbindungsmechanismus nach einem der Ansprüche 4 oder 5,
**dadurch gekennzeichnet,**
**dass** eine Feststelleinrichtung zum Feststellen des zweiten Sicherungselementes vorgesehen ist.

## Claims

1. Connecting mechanism, more particularly for connecting arm rests to beauty couches or cosmetic chairs, having a base element (1) which has a fastening section (1a) for fastening onto a piece of furniture, more particularly a seat or couch member, and with a fastening element (2) which is designed for attaching to a part, more particularly an arm rest, which is to be connected to the piece of furniture, wherein the fastening element (2) is designed for detachably connecting to the fastening section (1a) and the fastening section (1a) has a socket unit (1b) for receiving an area (2b) of the fastening element (2) wherein a securing device (3) is provided which engages in the area (2b) of the fastening element (2) when this is received in the socket unit (1b), wherein the securing device (3) has an engagement element (3a) which is pretensioned in the direction of the fastening element (2b) which is received in the socket unit (1b) wherein the engagement element engages in a recess (2c) provided in the fastening element and the recess (2c) is formed as a groove wherein the engagement element has an opening (3f) through which the area (2b) of the fastening element (2) can pass wherein the opening (3f) has an edge (3g) which is designed to enter into the recess (2a)
**characterised in that** the securing device (3) has an actuating element (3b) for actuating the engagement element (3a) which is designed so that it can be actuated radially (P1) relative to the fastening element (2).

2. Connecting mechanism according to claim 1
**characterised in that** the securing device (3) is connected, preferably by screws, to the socket unit (1b).

3. Connecting mechanism according to claim 1 or 2
**characterised in that** the recess (2c) is designed as a circumferential groove.

4. Connecting mechanism according to one of the preceding claims
**characterised in that** a second securing device is provided.

5. Connecting mechanism according to claim 4
**characterised in that** the second securing device has a second securing element and is mounted spaced from the first securing device (3).

6. Connecting mechanism according to one of claims 4 or 5
**characterised in that** a locking device is provided for locking the second securing element.

## Revendications

1. Mécanisme d'assemblage, en particulier pour assembler des accoudoirs à des divans ou à des fauteuils à usage cosmétique, avec un élément de base (1), qui présente une section de fixation (1a) pour la fixation à un meuble de repos, en particulier à un élément de fauteuil ou de divan, et un élément de fixation (2), qui, prévu pour l'adaptation à un élément à assembler au meuble, en particulier à un accoudoir, est conçu pour liaison amovible à la section de fixation (1a), ladite section de fixation (1a) présentant un réceptacle (1b) pour recevoir une section (2b) de l'élément de fixation (2), un dispositif de sécurité (3) étant prévu, lequel s'engage dans la section (2b) de l'élément de fixation (2), lorsque celui-ci vient se loger dans le réceptacle (1b), le dispositif de sécurité (3) présentant un élément d'attaque (3a), précontraint dans la direction de l'élément de fixation (2), logé dans le réceptacle (1b), lequel élément d'attaque s'engage dans une cavité (2c), prévue dans l'élément de fixation (2), la cavité (2c) étant réalisée en tant que rainure, l'élément d'attaque présentant un évidement (3f), à travers lequel peut passer la section de fixation (2b) de l'élément de fixation (2), l'évidement (3f) présentant un bord (3g), qui est prévu pour pénétrer dans la cavité (2c),
**caractérisé en ce que**
le dispositif de sécurité (3) présente un élément d'actionnement (3b) pour l'actionnement de élément d'attaque (3a), lequel est conçu de sorte qu'il peut être actionné radialement (P1) par rapport à l'élément de fixation (2).

2. Mécanisme d'assemblage selon la revendication 1, **caractérisé en ce que** le dispositif de sécurité (3) est relié à un réceptacle (1b), de préférence par vissage.

3. Mécanisme d'assemblage selon revendication 1 ou 2, **caractérisé en ce que** la cavité (2c) est réalisée sous la forme d'une rainure périphérique.

4. Mécanisme d'assemblage selon l'une des revendications précédentes, **caractérisé en ce qu'**un deuxième dispositif de sécurité est prévu.

5. Mécanisme d'assemblage selon la revendication 4, **caractérisé en ce que** le deuxième dispositif de sécurité présente un deuxième élément de sécurité et est disposé à distance du premier dispositif de sécurité (3).

6. Mécanisme d'assemblage selon l'une des revendications 4 ou 5, **caractérisé en ce qu'**un dispositif de blocage est prévu pour bloquer le deuxième élément de sécurité.
